# EUROPEAN PATENT APPLICATION

(11) **EP 4 786 056 A1**
(43) Date of publication of application: **05.08.2026**
(21) Application number: 25154651.1
(22) Date of filing: 29.01.2025
(51) Int. Cl.: B03B 9/06

(54) **A RECYCLING PLANT AND A METHOD FOR RECYCLING MULTI-FRACTIONAL PLASTIC WASTE MATERIAL**

(71) Applicant: Borealis GmbH, 1020 Vienna (AT)
(72) Inventor: WYKOPAL, Petra, 2320 Schwechat (AT); VOIGT, Björn, 44486 Stenungsund (SE); SCHNEIDER, Horst, 2320 Schwechat (AT); VANDERSPIKKEN, Jelle, 3583 Beringen (BE)
(74) Representative: Maikowski & Ninnemann Patentanwälte Partnerschaft mbB

(57) **Abstract**

The present invention refers to a recycling plant comprising at least one process building (200) with at least one pre-processing section (210) and at least one post-processing section (220) and a container yard (300) comprising multiple positions for unloading, storing and/or loading at least partially filled containers and/empty containers. The recycling plant further comprises at least one container transport and tracking system, preferably an automated container transport and tracking system.

## Description

The present disclosure relates to a recycling plant and a method for recycling multi-fractional plastic waste material in such a recycling plant.

### Background

Recycling of plastic waste is generally known as the process of collecting plastic waste, processing it and using it as a raw material for making new plastic products. Recycling of plastic waste contributes to reduce plastic pollution and its environmental impact.

Generally, collected plastic waste includes multiple fractions of different colors (such as white, transparent etc.) and different polymer types (such as PE, PP etc.) all mixed together. To be able to make new high-quality plastic products thereof, the recycling of plastic waste includes a step of mechanical sorting of the plastic waste according to colors and/or polymer types into different fractions of plastic waste by a sorting unit. Then, after the mechanical sorting, the sorted fractions of plastic waste pure in type and/or color can be post-processed into plastic recyclates and subsequently into new high-quality plastic products of a desired color and type.

The mechanical sorting of the plastic waste into different fractions according to colors and polymer types is performed as a continuous process by the sorting unit. On the other hand, the subsequent post-processing such as washing, melting and extruding of the sorted fractions is typically performed campaign-wise, i.e. in batches of a predetermined volume or weight. Accordingly, while the sorting unit continuously outputs plastic waste of different fractions, the post-processing is often performed in alternating campaigns of the different fractions.

Said recycling steps comprising pre-processing and post-processing are typically carried out in recycling plants. The current recycling plants covering steps from feedstock to extrusion of polyolefins are operated often in a pre-industrial scale with significant challenges and problems. Typically, the incoming feedstock, but also the intermediate fractions are baled or stored in big bunkers

Thus, the infrastructure around the core processes is mostly based on manual work with baling, de-baling steps and forklifts. This causes several problems: bale storage requiring metallic wires, a rather high degree of manual work, impact on the environment (in particular due to odor and vermin).

For example, bale storage of plastic waste material is a known fire hazard requiring advanced fire detection and suppression systems. Generally, an intensive work with forklifts and trucks is needed to move the material through the process steps. This increases drastically the traffic, but also the fire risk due to hot surfaces in combination with dirty plastic material. Quality issues and profit losses related to human errors (e.g. wrong bale inserted can jeopardize the quality of the entire production batch).

Typically, the storage of feedstock and intermediate fraction happens outside, being impacted by the sun (aging effects & degradation of the feedstock) and rain (leaching of pollutants to the environment) or in simple storages with only a simple cover or roof. Thus, large indoor warehouses for the storing and provision of targeted material are required due to the low predictability of the incoming qualities and due to weather impacts (rain & direct sun exposure).

Furthermore, in regard to the overall infrastructure the automation degree in recycling plants. The management of the infrastructure is intense and consists of a large number of manual paperwork (e.g. certificates, material tracing, instant warehousing & instant inventory knowledge)

Therefore, it is an object of the invention to provide a recycling plant and a method for recycling multi-fractional plastic waste material in such a recycling plant that can overcome the described drawbacks of the currently operated recycling plants.

### Description

This object is solved by a recycling plant with the features of claim 1 and a method for recycling multi-fractional plastic waste material in such a recycling plant with the features of claim 12.

It is pointed out that insofar as the term embodiment or aspect or alternative is used in the following, or features are presented as being optional, this should be interpreted in such a way that the only protection sought is that of the invention claimed and defined in the appended claims.

According to the invention, a recycling plant comprising at least one process building and at least one container yard is provided, wherein the at least one process building comprises at least one pre-processing section for sorting multi-fractional plastic waste material and at least one post-processing section for processing sorted fractions of plastic waste material, and wherein the at least one container yard comprises or is made up multiple positions for unloading, storing and/or loading at least partially filled containers and/or empty containers. The recycling plant further comprises at least one container transport and tracking system, preferably an automated container transport and tracking system.

### Pre-processing section

According to the invention, the at least one pre-processing section comprises at least one input unit configured for receiving (multi-fractional plastic waste material as feedstock from at least one multi-fractional plastic waste material storage container being located outside of the at least one process building in the container yard. It is to be understood that the multi-fractional plastic waste material received as feedstock is already separated from most of the non-plastic impurities such as paper, glass etc.

It is further to be understood that the term "plastic waste material" used herein has already completed its first use cycle, and is not to be confused with "virgin" feedstock which has not completed its first use cycle.

The multi-fractional plastic waste material may be any plastic waste with a purity <99%. obtained from post-consumer waste. Several possible feedstocks from municipal trash collection systems are commercially available and allow providing post-consumer plastic trash. It may be obtained from domestic waste streams (i.e. it is a product of domestic recycling) for example the "yellow bag" recycling system organized under the "Green dot" organization, which operates in some parts of Germany. Depending on the participation of the consumer, the purity of those feedstocks will differ which is usually indicated by the collecting systems.

The plastic waste material may comprise recyclable plastic material of one or more of the following polymers: polyolefins such as polyethylene and polypropylene, polyacetal, polystyrene, polyvinyl chloride, acrylic, polycarbonate, synthetic rubber, phenol formaldehyde resin, neoprene, nylon, polyacrylonitrile, polylactic acid, polyvinyl butyral, silicone, acrylonitrile butadiene styrene, polyaryletherketone. It is particularly preferred when the plastic waste material comprises from 50 to 100 wt.-%, more preferably from 70 to 100 wt.-%, and most preferably from 80 to 100 wt.-% polyethylene and/or polypropylene.

According to the invention, the at least one pre-processing section comprises further at least one sorting unit configured for sorting the multi-fractional plastic waste material into (predefined) sorted fractions of plastic waste material and rejected waste material fractions. The sorting of the multi-fractional plastic waste material comprises in particular a dry-sorting.

The rejected waste material may include rejected plastic waste material, but also non-plastic rejected material such as metals, dirt, glass etc. Especially metals are separated using special magnets and Eddy current ejectors.

According to the invention, the at least one pre-processing section comprises further at least one filling unit configured for filling at least one of the sorted fractions of plastic waste material into at least one storage container being located outside of the at least one process building in the container yard. Said storage container can also be designated as sorted fraction storage container that allows an intermediate storage of the sorted factions of the plastic waste material.

In an embodiment, multiple of said filling units configured for filling the sorted fractions into the sorted fraction storage containers are provided, wherein each of the filling units is configured for filling one of the multiple sorted fractions of the plastic waste material into at least one sorted fraction storage container. Thus, each of the sorted fractions of the plastic waste material is filled into specific storage containers.

According to the invention, the at least one pre-processing section comprises further at least one discarding unit configured for filling rejected waste material fraction into a waste storage container for rejected waste material being located outside of the at least one process building in the container yard. The containers with the rejected waste material may be subsequently sent to external recycling operations or incineration.

In an embodiment, the at least one pre-processing section of the at least one process building comprises additionally at least one input unit configured for receiving at least one chemical. Said chemicals can be additives used primarily in the post-processing as described further below. Said chemicals may include as antioxidants and pigments for in the compounding step but also NaOH, detergent and antifoaming agent for the washing step. Actually, any chemical used in the plant could arrive in containers.

### Post-processing section

According to the invention, the at least one post-processing section comprises at least one input unit configured for receiving the sorted plastic waste material from the at least one sorted fraction storage container.

It is to be understood that it is also within the scope of the invention that the sorted plastic waste material can also be imported from an external source, i.e. sorted plastic waste material may also be sorted at a different sorting plant than the above described pre-processing section.

According to the invention, the at least one post-processing section comprises at least one post-processing unit configured for processing the at least one sorted fraction of plastic waste material.

In an embodiment, the at least one post-processing unit of the at least one post-processing section comprises at least one plastic waste cleaning unit for cleaning the at least one sorted fraction of plastic waste material. The plastic waste cleaning unit may be a washing device. The plastic waste cleaning unit may use cold water and/or hot water and chemicals for the cleaning of the plastic waste.

In an embodiment, the at least one post-processing unit comprises further a heat-processing unit configured for thermally processing the at least one sorted fraction of plastic waste material, particularly above the melting temperature of the plastic. The heat-processing unit may be an extruder (i.e. an extrusion molding device) providing the post-processed plastic waste material as pellets.

It is also within the scope of the invention, that pellets, in particular pellets of virgin polymer material, like virgin polypropylene or polyethylene pellets, from an external source are encompassed that are used in compounding (heat processing) together with the recycled material. In this case, the at least one post-processing unit comprises further at least one input unit configured for receiving such polymer pellets. Furthermore, the container storage yard comprises storage positions for respective storage containers for the virgin pellets.

It is also possible that the at least one post-processing unit comprises at least one buffer unit that is interposed between the at least one cleaning unit and the at least one heat processing unit and configured for intermediate storing the cleaned sorted plastic waste material before heat-processing. Such a buffer unit adds flexibility to the post-processing step.

In a further embodiment, the at least one post-processing unit comprises at least one discarding unit configured for filling any rejected waste from the post-processing step such as rejected plastic waste, sludge from water treatment and/or a stream of polymer from the melt filtration of any extruder in the heat processing unit.

According to the invention, the at least one post-processing section comprises further at least one filling unit configured for filling the post-processed plastic waste material (in particular as pellets) into a product storage container being located inside or outside of the process building in the container yard. In a preferred embodiment, the product storage container is located inside of the process building, since it is easier to fill a container and then move it to the storage position than routing a filling pipe to a container in the container yard.

As described above, each of the pre-processing unit and the post-processing unit comprises input units and output units, such as filling units for filling containers with processed waste material or discarding units for discarding any waste material into respective waste containers.

Thereby, the number of input units, filling units and discarding units may differ from each other for the pre-processing unit and the post-processing unit. In an embodiment, the number of filling units of the pre-processing section configured for filling the sorted fractions of plastic waste material into storage containers is larger than the number of input units of the post-processing section configured for receiving the sorted fractions from the storage containers. Thus, in one embodiment the amount of pre-processed sorted waste material leaving the pre-processing unit is larger than the subsequent input of the sorted waste material into the post-processing unit. In this case, the excess of pre-processed sorted waste material leaving the pre-processing unit is stored in appropriate intermediate storage containers before campaign wise post-processing of the pre-processed sorted material.

### Container yard

According to the invention, the recycling plant comprises at least one container yard, said yard comprising multiple positions for unloading, storing and/or loading at least partially filled containers and/or empty containers.

Thus, the container yard is configured to store all containers, wherein the containers are randomly distributed over the container yard based on the automated transport and tracking system.

According to the invention, the container yard encompasses
- at least one positions for storing the storage containers, wherein each container is at least partially filled with multi-fractional plastic waste material, and
- at least one container unloading positions being adjacent to the at least one input unit of the pre-processing section configured for receiving multi-fractional plastic waste material from said containers. Thus, said input positions of the container yard are designated for unloading incoming containers with multi-fractional plastic waste material.

According to the invention, the container yard encompasses further
- at least one storage container filling position adjacent to the at least one filling unit of the pre-processing section configured for filling at least one of sorted fractions of plastic waste material from the pre-processing section into said sorted fraction storage container,
- at least ones storage container waiting position for storing the sorted fraction storage containers, wherein each container is at least partially filled with at least one of the sorted fractions of plastic waste material,
- at least one storage container unloading position adjacent to the at least one input unit of the post-processing section configured for receiving at least one of the predefined sorted fractions of plastic waste material from the respective sorted fraction storage container.

Thus, said positions of the container yard are designated for mainly intermediate storage of empty containers waiting to be filled with fractions of sorted plastic waste material from the pre-processing section, and full containers waiting to be emptied into the post-processing unit.

It is to be understood , that said empty containers waiting to be filled can be located anywhere in the container yard, just like full containers waiting to be emptied.

According to the invention, the container yard encompasses further at least one position for storing rejected waste material storage containers, wherein each container is at least partially filled with rejected waste material from the pre-processing section or optionally post-processing section. The rejected waste material from the post-processing section may be made up of sludge, as the washing step removes contaminants, and the associated water treatment typically generates quite some sludge.

For this purpose, the container yard may comprise a rejected waste material storage container filling position that is adjacent to the at least one discarding unit of the pre-processing section configured for filling the rejected waste material fraction from the pre-processing section into said rejected waste material storage container, and a rejected waste material storage container filling position that is adjacent to at least one discarding unit configured for filling any rejected waste material from the post-processing step into said waste storage container.

Thus, said rejected waste material storing position of the container yard is designated for storage of containers filled with any waste material of the recycling process in both pre- and post-processing section.

According to the invention, the container yard encompasses further
- at least one product storage container filling position that are adjacent to the at least one filling unit configured for filling the post- processed plastic waste material from the post-processing section into said product storage container, and
- at least one position for storing product storage containers wherein each container is at least partially filled with post- processed plastic waste material.

Thus, said positions of the container yard are designated for filling and storage of containers filled with the plastic product, preferably as pellets, obtained after pre- and postprocessing steps of the recycling process. The product filled containers may subsequently be transported to any customer for further use or to another location within the same company. They may also be emptied to a repacking line to package the product in e.g. 25 kg bags or octabins.

### Transport system / Tracking system

According to the invention, the recycling plant further comprises at least one automated container transport system that is configured for locating and moving said storage containers from or to one of the unloading, storing and/or loading positions of the container yard, i.e. for transporting the containers between said positions.

In one embodiment, the at least one automated container transport system is an overhead crane.

In another embodiment, each of said storage containers is provided with at least one tracking system. Such a tracking system comprises at least data associated with the delivery of an incoming shipment of multi-fractional plastic waste material, and the recycling process comprising the steps of unloading, sorting, intermediate storage, processing, product storage and optionally product packaging. The tracking system preferably uses Al algorithms for container movement on each level of the recycling plant. The tracking system is described in more detail further below.

Thus, a modular, stackable container-based infrastructure with an Al supported crane system for container movements on each level is used, starting with the feedstock, all applicable intermediate fractions, rejects, but also final products and all required chemicals etc. to operate the plant. By using an Al supported crane system, it is possible to optimize the stacking order of the containers to minimize movement and hence save energy and costs.

### Method

The recycling plant allows for recycling multi-fractional plastic waste material.

Such a method for recycling multi-fractional plastic waste material is carried out in the above described recycling plant comprising at least one process building with at least one pre-processing section and at least one post-processing section and at least one container yard with multiple positions for unloading, storing and/or loading empty or at least partially filled storage containers, in particular storage containers each at least partially filled with multi-fractional plastic waste material, sorted fractions of plastic waste material, rejected waste material and thermally processed plastic waste material.

According to the invention, the method comprises the steps of:
- Automatically moving the storage containers that are at least partially filled with multi-fractional plastic waste from its storage position of the container yard to the at least one input unit of the pre-processing section configured for receiving multi-fractional plastic waste material,
- Pre-processing the multi-fractional plastic waste material by sorting the multi-fractional plastic waste material into sorted fractions of plastic waste material and rejected waste material fraction in a least one sorting unit of the pre-processing section,
- Filling at least a part of one of the sorted fractions of plastic waste material at at least one filling unit of the pre-processing section configured for filling the sorted fractions of plastic waste material into at least one sorted fraction storage container at a storage container filling position of the storage container section that is being adjacent to said at least one filling unit,
- Automatically moving at least one sorted fraction storage container from the container filling position to a waiting position, and
- Automatically moving at least one sorted fraction storage container from the waiting position to a container unloading position adjacent to at least one input unit of the post-processing section configured for receiving at least one of the sorted fractions of plastic waste material from the respective sorted fraction storage container, or
   - optionally automatically moving at least a part of the sorted fractions of plastic waste material directly from the pre-processing section to the post-processing section, for example using a conveyer belt,
   - Subsequently post-processing at least a part of the sorted fractions of plastic waste material in at least one post-processing unit of the post-processing section, and
   - Filling the post-processed plastic waste material at at least one filling unit configured for filling the post-processed plastic waste material into at least one product storage container at a product storage container position being adjacent to the at least one filling unit.

According to the invention, the containers are moved automatically by at least one automated container transport system configured for placing and moving said storage containers from or to one of said positions of the container yard. In an embodiment, each of the different storage containers (or storage container positions) are tracked using the tracking system, as will be described below.

In an embodiment of the recycling method, any waste material that is rejected during pre-processing or post-processing is filled at at least one discarding unit of the pre-processing section into a rejected waste material storage container at a waste storage container filling position of a section for waste storage containers of the container yard that is adjacent to the at least one discarding unit and/or at at least one discarding unit of the post-processing section.

As mentioned previously, the multi-fractional plastic waste material is sorted, preferably mechanically sorted in a dry-sorting process, in the pre-processing section into different multiple fractions defined by certain properties, such as color and polymer type. As the pre-processing section operates mainly continuously, in contrast to the campaign wise operation of the post-processing section, in one embodiment the sorted multiple fractions of plastic waste material have to be stored after leaving the pre-processing section. This is in particular useful in case the post-processing is not working for some reason, the pre-processing shall still continue (but then sending all sorted fractions to their respective containers and none via the conveyor belt directly from the pre-processing section to the post-processing section.

The intermediate storage of the sorted multiple fractions of plastic waste material allows in another embodiment of the recycling method, that the post-processing of the (multiple) sorted fractions of plastic waste material in the post-processing section is operated campaign-wise by switching between a first campaign of post-processing a first of the (multiple) sorted fractions of plastic waste material and a second (further) campaign of post-processing a second (further) of the multiple sorted fractions of plastic waste material.

The tracking system employed may use different data stored in a data base relating to the incoming multi-fractional plastic waste material, sorted plastic waste material leaving the pre-processing section and the plastic material product leaving the post-processing section. The data may be associated with the process order of the recycling plant.

The incoming multi-fractional plastic waste material is received as feedstock from a vendor, for example responsive to a purchase order being sent to said vendor. The purchase order may comprise at least one of: a purchase order number, a material specification, an order date. When the feedstock of multi-fractional plastic waste material is received the transport ID (for example the truck ID) is checked and the transport is weighed. In connection with the receiving, following delivery data is registered into the recycling plan system, for example into a database. The data may be registered or received in electronic form from another system, for example from the vendor's system. Registering may be done at least in part in an automatic manner, whereby a request for at least part of the delivery data is triggered by the creation, processing, finalization or acceptance of the purchase order. At least part of the delivery data may be received from a smart scale or as a result of a visual inspection, for example conducted by a machine vision apparatus.

**Table 1. Exemplary delivery data**

| ***Data structure delivery*** |
|---|
| *Raw material specification* |
| *Feedstock material number* |
| *Ship from party* |
| *Purchase order number* |
| *Purchase order information* |
| *Inbound delivery number* |
| *Item number (from purchase order)* |
| *Vendor data* |
| *Order volume* |
| *Delivery date* |
| *Gross weight* |
| *Time stamp* |

After receiving, the received feedstock must be unloaded from the transport. When unloading, for example as part of unloading phase, the incoming shipment is stored in at least one storage container for the multi-fractional plastic waste material, The storage container the received multi-fractional plastic waste material, is unloaded into may be termed the first storage location or container. In connection with the unloading, unloading data is registered into the plant information system, for example into a database. The data may be registered or received in electronic form from another system, for example from an automatic weighing apparatus. Registering may be done at least in part in an automatic manner, whereby a request for at least part of the data is triggered by the creation, finalization or acceptance of an unloading process order within database. Storage containers typically only comprise material from a single feedstock lot.

**Table 2. Exemplary unloading data**

| ***Data structure unloading*** |
|---|
| *Net weight of accepted lot (after truck weight is taken at dispatch)* |
| *Net weight of rejected bales* |
| *Type of feedstock specification* |
| *Batch and*/*or Lot number of supplier* |
| *Storage Location ID for the accepted lot* |
| *Storage Location ID for the rejected bales* |
| *Reason for rejection of rejected bales* |
| *Goods receipt* |
| *Time stamp* |
| *Receiving batch number generated* |
| *Unloading process order* |

After unloading, the unloaded multi-fractional plastic waste material is stored in said storage container. The container may be associated with or comprises a scale for weighing the contents of the container. The data may be stored in the database and updated each time an operation is conducted with respect to the first container. The data may be registered or received in electronic form from another system, for example from an automatic weighing apparatus such as a scale. Registering may be done at least in part in an automatic manner, whereby a request for at least part of the data is triggered by the creation, finalization or acceptance of a process order related to the location, for example a filling process order, within database

**Table 3. Exemplary multi-fractional waste material storage position data**

| ***Data structure storage container multi-fractional plastic waste material*** |
|---|
| *Container ID* |
| *Storage Location ID* |
| *Location contents weight* |
| *Type of feedstock specification* |
| *Batch and*/*or Lot number of supplier* |
| *Location filled* / *emptied* |
| *Total delivery lot weight* |
| *Filling* / *emptying process order* |
| *Recipe* |
| *Time stamp* |

The multi-fractional plastic waste material is dry sorted in the pre-processing section. As a result of the dry sorting, the dry sorted material is placed storage containers at least partially filled with sorted fractions of plastic waste material. Sorted plastic waste material from a dry sorting may be placed into multiple storage containers, wherein each storage container may comprise one of the sorted fractions of plastic waste material from several distinct dry sorting. The plastic waste material may be dry sorted based on material and/or colour, for example mixed colour polyethylene may be sorted into separate storage locations of black polyethylene and coloured polyethylene. In another example, mixed polypropylene may be sorted into separate storage locations of transparent polypropylene and coloured polypropylene. Part of the plastic waste material may be rejected and placed in a different storage container at least partially filled with rejected waste material from the pre-processing section.

In connection with the dry sorting, dry sorting data is registered into the manufacturing information system, for example into a database. Dry sorting data may be registered or received in electronic form from another system, for example from an automatic weighing apparatus. Registering may be done at least in part in an automatic manner, whereby a request for at least part of the data is triggered by the creation, finalization or acceptance of a dry sorting process order within the database. As can be seen in the below table, weight may be stored for 1 to n sorted materials, where each sorted material may be part of 1 to n material streams. Said material streams may comprise different materials from each other as a result of sorting.

**Table 4. Exemplary data for sorted fractions of plastic waste material**

| ***Data structure sorted fractions of plastic waste material*** |
|---|
| *Weight of pre-sorted material (1 to n)* |
| *Weight of rejected material (1 to n)* |
| *Weight of material (for each storage location) for each material stream (1 to n)* |
| *Type of material (for each storage location) for each material stream (1 to n)* |
| *Time stamp* |
| *Dry sorting process order* |

The storage containers being at least partially filled with a least one of the sorted fractions of plastic waste materials may be associated with or comprise a scale for weighing the contents of the respective storage containers. Additionally, or alternatively, a data structure may be associated with each sorted fraction storage container within the database. Said data structure may be updated each time an operation is conducted with respect to the sorted fraction storage container.

The sorted fraction storage containers data may be registered or received in electronic form from another system, for example from an automatic weighing apparatus. Registering may be done at least in part in an automatic manner, whereby a request for at least part of the data is triggered by the creation, finalization or acceptance of a process order related to the sorted fraction storage container, for example an emptying process order, within database.

**Table 5. Exemplary storage data for sorted fraction of plastic waste material**

| ***Data structure sorted fraction of plastic waste material*** |
|---|
| *Storage container ID (for each storage container)* |
| *Data (for each quantity of sorted fraction of plastic waste material within the storage container)* |
| *Weight of material (for each storage container)* |
| *Type of material (for each storage container)* |
| *Position of storage container* |
| *Time stamp* |
| *Process order* |

Regarding the post-processing, the processing may comprise any of the following processing phases, for example: cleaning (for example washing), heat-processing (for example extrusion), compounding, deodorization, cooling, etc. After every post-processing phase, rejected material is collected and set aside. This rejected material may be later reused or discarded. Further, before and after every post-processing phase, the weight of the material to be post-processed and the post-processed product material is measured. Thus, a mass balance may be calculated for each post- processing phase. The mass balance may be calculated, for example, by a SCADA system. During post-processing, the sorted fraction of recyclable plastic material is processed so that it becomes recycled plastic product material.

As mentioned previously, the material to be post-processed is formed into a batch campaign. Batch campaign means the production of a certain type and amount of material, for example a campaign could be a black PE campaign for example for 75 thousand kilos. A batch can be between 25 kilograms and 500 tons, preferably between 20 tons and 160 tons, in particular 75 or 150 tons. Multiples of 20 tons may be preferred.

A batch campaign may further comprise a post-processing plan. A post-processing plan may comprise selected post-processing phases and, optionally, post-processing parameters associated with the selected phases. A post-processing plan may be formulated based on a previous batch campaign, for example using the same material, wherein the previous batch campaign data may be located within a database. The database may be searched for a previous batch campaign corresponding to a stakeholder order, and in the event that a corresponding campaign is found, to use the processing phases and optionally the processing parameters as a basis for the batch campaign.

Typically, at least one sorted fraction storage container is selected to be included into the batch campaign. A data structure, such as batch campaign data, may be associated with each batch campaign within database. Said data structure may be updated each time an operation is conducted with respect to the campaign. The batch campaign data may be registered or received in electronic form from another system, for example from an automatic weighing apparatus. Registering may be done at least in part in an automatic manner, whereby a request for at least part of the data is triggered by the creation, finalization or acceptance of a process order related to the batch campaign, for example a extrusion process order, within the database.

**Table 6. Exemplary post-processing batch campaign data**

| ***Data structure** for post-processing batch camp* |
|---|
| *Storage container data (for each sorted fraction storage container)* |
| *Process parameters for each post-processing phase* |
| *Batch and*/*or Lot number* |
| *Weight of sorted fraction plastic waste material before and after each post-processing phase* |
| *Post-processing plan comprising an indication of the planned post-processing phases* |
| *Time stamp* |
| *Process order* |

Post-process parameters are stored within the database for each post-processing phase of the batch campaign. The parameters are therefore available, for example to the recipient of the recycled product material. The parameters may be communicated later, in real time or in any other time frame.

**Table 7. Exemplary parameters registered with respect to a post-processing phase**

| ***Data structure post-processing phase*** |
|---|
| *Process order* |
| *Batch ID* |
| *Laboratory information management system (LIMS) data including sampling points* |
| *Weight of material before and after the post processing phase* |
| *Yield (estimate of product material per material used)* |
| *Machine parameters (for example temperature values)* |
| *Machine process history (for example electrical current values during process)* |
| *Mass balance (e.g. from extruder)* |
| *Time stamp* |

As mentioned, the dry sorted fractions of the plastic waste material may be washed as part of post-processing cleaning. Suitable equipment such as friction washers or rotary washers may be used as part of the cleaning process. Suitable washing compounds include water, caustic soda, detergent, organic solvent, or any combination thereof. Washing may be repeated as required.

After washing, the material may be thermally treated using a plastics extruder. After the extrusion phase, the recycled product material may be immediately ready for packaging. The recycled product material is typically formed into pellets (pelletization). The extruded and/or pelletized product material may be compounded after extrusion. Deodorization may be optionally performed after the extrusion process.

The washed and/or extruded product material may undergo a compounding process, where additives and/or other materials, i.e. the components are mixed with the product material. The mixing is performed when at least some of the components are in a molten state. In other words, the material may be first be extruded and pelletized and then optionally compounded, or alternatively compounded directly after washing. After compounding, the material may be pelletized.

After post- processing, at least some of the recycled product material may be filled into a product storage container. Some of the post-processed material, however, may be rejected and returned to a prior part of the method discussed herein. For example, some of the rejected material during post-processing may contain impurities and thus will need to undergo dry sorting again or is preferably discarded.

In connection with the product storage, product storage container data is registered into the manufacturing information system, for example into a database. The product storage container data may be registered or received in electronic form from another system, for example from an automatic weighing apparatus. Registering may be done at least in part in an automatic manner, whereby a request for at least part of the data is triggered by the creation, finalization or acceptance of a packaging process order within the database.

A product storage container may comprise material from more than one batch, whereby the data structure then comprises batch campaign data for each batch within the product storage container. For each product storage container, data is registered into the manufacturing information system, for example into the database. The product storage container data may be registered or received in electronic form from another system, for example from an automatic weighing apparatus. Registering may be done at least in part in an automatic manner, whereby a request for at least part of the data is triggered by the creation, finalization or acceptance of a packaging process order within database.

**Table 8. Exemplary product storage container data**

| ***Data structure** product storage container* |
|---|
| *Batch campaign data (for each batch in product storage container)* |
| *Type of feedstock specification* |
| *Batch and*/*or Lot number* |
| *Product storage container identifier* |
| *Product name* |
| *Additive 1..additive n* |
| *product storage container measurement result* |
| *QA (quality assurance) data 177 (for each batch)* |
| *Time stamp* |

Independently of the product storage container, a quality assurance process is conducted on the recycled product material. Such a process may incorporate data from any stage of the production. In connection with the quality assurance process, the data is registered into the manufacturing information system, for example into a database. The data may be registered or received in electronic form from another system, for example from a SCADA or Laboratory information management system, LIMS. Registering may be done at least in part in an automatic manner, whereby a request for at least part of the data is triggered by the creation, finalization or acceptance of a quality assurance process order within database. The data structure for each product storage container comprises quality assurance data. The certificate of analysis, COA, may comprise at least one of the following: materials identification, tested properties and test methods, date inspected, contact details of inspectors, evidence of conformance, signature data.

**Table 9. Exemplary quality assurance data**

| ***Data structure quality assurance*** |
|---|
| *Final batch size (weight)* |
| *Batch and*/*or Lot number* |
| *Certificate of Analysis (COA) and associated data* |
| *Product batch data (time, weight, properties)* |
| *Laboratory information management system (LIMS) quality assurance data* |
| *Product release code (e.g. for internal use)* |
| *Time stamp* |

Product storage containers, for example as part of shipping process. A shipping lot is formed, said lot comprising at least one product storage container. In connection with the shipping process, shipment lot data is registered into the manufacturing information system, for example into a database. The shipment lot data may be registered or received in electronic form from another system, for example from a SCADA system. Registering may be done at least in part in an automatic manner, whereby a request for at least part of the data is triggered by the creation, finalization or acceptance of a shipping process order within the database. The data structure for the shipment lot comprises data of each product storage container within the shipment lot. The presence of the data within a database such as database may serve as an indication that the process is complete.

**Table 10. Exemplary shipment lot data**

| ***Data structure shipment lot*** |
|---|
| *product storage container data (for each product storage container in shipment)* |
| *Type of feedstock specification* |
| *Batch and*/*or Lot number of supplier* |
| *Customer required quality control parameter 1..n* |
| *Shipment number* |
| *Delivery number* |
| *Sales order* |
| *Loading instruction* |
| *Delivery papers* |
| *Time stamp* |

Each batch may form one or more shipment lots, whereby a batch may be shipped (in separate shipment lots) to multiple customers in delivery phase. In connection with the delivery phase, outgoing delivery data is registered into the manufacturing information system, for example into a database. The outgoing delivery data may be registered or received in electronic form from another system, Once the customer receives the shipment lot, data such as a time stamp may be provided into database, for example by a shipment tracking system. Such a system may be connected to database via a cloud service,.

The recycling plant and the recycling method have multiple benefits: It significantly reduces requirements for buildings, HVAC, fire suppression, pest control etc. Safety in terms of reduced / eliminated fork lift operations is improved. Inherent fire safety (limited oxygen and no fire spreading across containers), Improved quality by high degree of automation - minimizing human error. The containers stacked "chaotically" allows for optimization of space. Detailed inventory control, allowing a central planning outside the locations (e.g. CES hub). Scalable based on the financial boundaries and the local Site conditions (containers can be rented when extra volume is required) . Flexible by "limitless" storage until the market allows appropriate pricing or the transportation is being done immediately via ships, trucks or railway. One single point of contact with trucks or rail cars (feedstock, additives, rejects, final product)

The aspects of the disclosure may be best understood from the following detailed description taken in conjunction with the accompanying figures. The figures are schematic and simplified for clarity, and they just show details to improve the understanding of the claims, while other details are left out. The individual features of each aspect may each be combined with any or all features of the other aspects. These and other aspects, features and/or technical effect will be apparent from and elucidated with reference to the illustrations described hereinafter, in which:
Fig. 1 is a schematic view of a recycling plant according to an embodiment of the recycling plant, and
Fig. 2 is a flowchart illustrating a method for preparing a fraction of sorted plastic waste according to the embodiment.

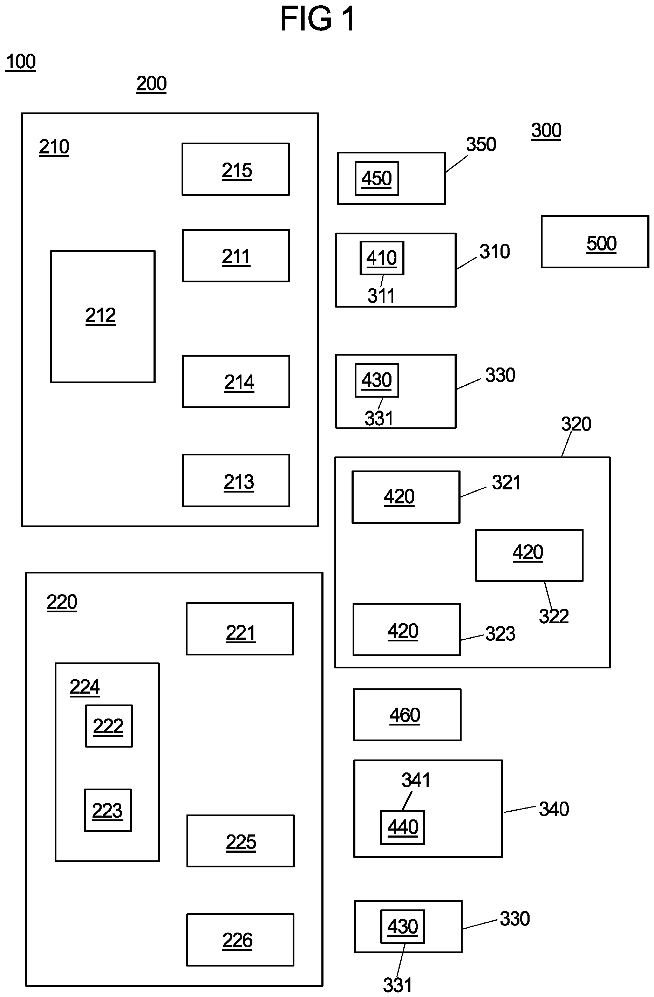

The basic structure of a recycling plant 100 will be described with reference to Fig. 1. Fig. 1 is a schematic view of a recycling plant 100 according to an embodiment of the present invention.

As shown in Fig. 1, the recycling plant (100) comprises a process building (200) and a container yard (300). The process building (200) comprises a pre-processing section (210) and a post-processing section (220).

The container yard (300) is made up of multiple positions for unloading, storing or loading at least partially filled containers and/or empty containers (310, 320, 330, 340, 350). The recycling plant further comprises also an automated container transport system (500).

The multi-fractional unsorted plastic waste material to be recycled is delivered to the recycling plant (100) in containers (410) wherein each of the containers (410) is at least partially filled with multi-fractional plastic waste material. The containers (410) are intermediately stored in position (310) of the yard before unloading at the input unit (211) of the pre-processing section (210) configured for receiving the unsorted multi-fractional plastic waste material.

After unloading at the pre-processing section (210), the unsorted multi-fractional plastic waste material is sorted in the sorting unit (212) configured for sorting the multi-fractional plastic waste material into predefined sorted fractions of plastic waste material (for example different color fractions) and rejected waste material fractions, such as metals, dirt, glass etc..

The different fractions of the sorted plastic waste material are subsequently filled into sorted fraction storage containers (420) for intermediate storage. The fractions of the sorted plastic waste material are filled into said storage containers at filling unit (213) configured for filling the sorted fractions of plastic waste material into the sorted fraction storage containers (420).

The sorted fraction storage containers (420) are located outside of the at least one process building (200) in the container yard (300). Specifically, the sorted fraction storage containers (420) are located in positions(320) for storing the sorted fraction storage containers (420) each container at least partially filled with the predefined sorted fraction of plastic waste material. It is pointed out that although the different positions in the container yard are depicted in Figure 1 as being physically separated, the positions are preferably randomly distributed over the whole container yard. The crane system stores all containers, irrespective of content, at the best suitable position or location.

For filling, the sorted fraction storage containers (420) are moved to sorted fraction storage container filling positions (321) that are adjacent to the filling unit (213) of the pre-processing section (210) configured for the predefined sorted fractions of plastic waste material from the pre-processing section (210) into said sorted fraction storage container (420).

Depending on the further process, after filling the sorted fraction storage containers (420) are moved to waiting positions (322) for the sorted fraction storage containers (420), said waiting positions (322) being adjacent to the sorted fraction storage container filling positions (321). However, empty containers waiting to be filled can also be located anywhere in the container yard, just like full containers waiting to be emptied.

For the further post-processing step, the storage containers (420) with the fractions of sorted plastic waste material are moved to a sorted fraction storage container unloading position (323) that is adjacent to the input unit (221) of the post-processing section (220). At the input unit (221) the predefined sorted fractions of plastic waste material are unloaded from the respective sorted fraction storage container (420) into the post-processing section (220).

It is also possible that at least a part of the sorted fractions of plastic waste material is automatically moved directly from the pre-processing section (210) to the post-processing section (220), for example using a conveyer belt (not shown), i.e. no storage containers for the sorted fractions of plastic waste material are required in this case.

In the post-processing section (220), the fractions of sorted plastic waste material undergo a cleaning step, for example washing step, in the cleaning unit (222) and a thermal processing step in a heat-processing unit (223), for example an extruder.

The post-processing section (220) may also comprise a buffer unit (not shown) that is interposed between the cleaning unit (222) and the heat processing unit (223) that allows an intermediate storage of the cleaned sorted plastic waste material before heat-processing.

The post-processing section (220) may also comprise at least one input unit (460) configured for receiving pellets, in particular pellets of virgin polymer material, like virgin polypropylene or polyethylene pellets, from an external source.

After leaving the heat processing unit (223) the thermally processed sorted plastic waste material is filled (in pellet form) at the filling unit (225) configured for filling the post-processed plastic waste material into a product storage container (440) being located outside of the process building (200) in the container yard (300).

The product storage containers (440) is at least partially filled with the pellets of post-processed plastic waste material at the product storage container filling positions (341) that are adjacent to the at least one filling unit (225).

The waste material that arises in the pre-processing section (210) and the post-processing section (220) is discarded into separate waste storage containers (430) that are located outside of the process building (200) in the container yard (300).

For this purpose, both pre-processing section (210) and post-processing section (220) comprise discarding units (214, 226) that are configured for filling rejected waste material fraction into the respective waste storage container (430).

The waste storage containers (430) are located in specific positions (330) of the container yard (300). The yard (300) comprises further waste storage container filling positions (331) that are adjacent to the respective discarding units (214, 216) of the pre-processing section (210) and post-processing section (220).

The container yard (300) encompasses also one or more position (350) for containers (450) comprising chemicals. Said chemicals can be additives used in both pre- and post-processing sections , but primarily in the post-processing as described further below.

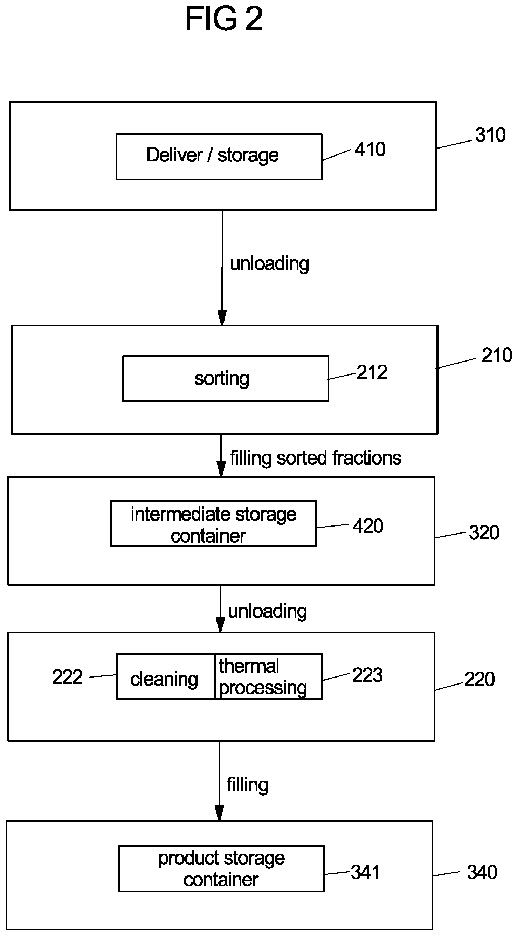

A method for recycling multi-fractional plastic waste material in the recycling plant of Figure 1 will be explained with reference to Figure 2.

Fig. 2 is a flowchart illustrating the method for recycling multi-fractional plastic waste material in the recycling plant of Figure 1.

As shown in Fig. 2, the method comprises the steps of delivering container with multi-fractional plastic waste from different suppliers and locating the delivered containers at a storage position (310) of the container yard (300).

In a next step, the storage containers (410) that are filled with multi-fractional plastic waste are automatically moved from the storage position (310) of the container yard (300) to the input units (211) of the pre-processing section (210) configured for receiving the multi-fractional plastic waste material.

In the subsequent step, the multi-fractional plastic waste material is pre-processed by sorting the multi-fractional plastic waste material into predefined sorted fractions of plastic waste material and rejected waste material fraction in the sorting unit (212) of the pre-processing section (210).

Next, the sorted fractions of plastic waste material is filled into the sorted fraction storage containers (420) at filling unit (213) of the pre-processing section (210) configured for filling the sorted fractions of plastic waste material into the sorted fraction storage container (420) at the sorted fraction storage container filling position (321) that is adjacent to the at least one filling unit (213) of the pre-processing section (210).

Next, the sorted fraction storage containers (420) are automatically moved from the sorted fraction storage filling position (321) to an sorted fraction storage container waiting position (322).

Next, the sorted fraction storage containers (420) are moved automatically from the sorted fraction storage container waiting position (322) to a sorted fraction storage container unloading position (323) adjacent to the input unit (221) of the post-processing section (220) configured for receiving the predefined sorted fractions of plastic waste material from the respective sorted fraction storage container (420).

In a more preferred variant, at least a part of the sorted fractions of plastic waste material is automatically moved directly from the pre-processing section to the post-processing section, for example using a conveyer belt,

In a further step, the predefined sorted fractions of plastic waste material are post-processed in the post-processing unit (224) of the post-processing section (220). The post-processing step includes the cleaning of the sorted fractions of plastic waste material in cleaning unit (222) and thermal processing sorted fractions of plastic waste material in the heating unit (223).

In the final step, the post-processed plastic waste material is filled into product storage containers (430) at the filling unit (225) of the post-processing section (220) at the product storage container position (341) of the product storage container position (340) being adjacent to the at least one filling unit (225).

The containers are moved automatically by automated container transport system (500) configured for placing and moving said storage containers (410, 420, 430, 440) from or to one of said positions (310, 320, 330, 340) of the container yard (300).

## Claims

1. A recycling plant (100) for performing a recycling process comprising at least one process building (200) and at least one container yard (300)
wherein the at least one process building (200) comprises
at least one pre-processing section (210) with
- at least one input unit (211) configured for receiving multi-fractional plastic waste material from at least one multi-fractional plastic waste material storage container (410) being located outside of the at least one process building (200) in the container yard (300),
- at least one sorting unit (212) configured for sorting the multi-fractional plastic waste material into sorted fractions of plastic waste material and rejected waste material fractions,
- at least one filling unit (213) configured for filling at least one of the sorted fractions of plastic waste material into at least one sorted fraction storage container (420) being located outside of the at least one process building (200) in the container yard (300), and
- at least one discarding unit (214) configured for filling rejected waste material fraction into a storage container (430) for rejected waste material being located outside of the at least one process building (200) in the container yard (300), and
at least one post-processing section (220) with
- at least one input unit (221) configured for receiving the sorted plastic waste material from the at least one sorted fraction storage container (420),
- at least one post-processing unit (224) configured for processing the at least one sorted fraction of plastic waste material, and
- at least one filling unit (225) configured for filling the post-processed plastic waste material into a product storage container (440) being located outside of the process building (200) in the container yard (300),
wherein the container yard (300) comprises multiple positions (310, 320, 330, 340, 350) for unloading, storing and/or loading at least partially filled containers and/or empty containers with
- at least one position (310) for storing the storage containers (410) each container at least partially filled with multi-fractional plastic waste material,
- at least one container unloading position (311) adjacent to the at least one input unit (211) of the pre-processing section (210) configured for receiving multi-fractional plastic waste material,
- at least one storage container filling position (321) adjacent to the at least one filling unit (213) of the pre-processing section (210) configured for filling at least one of sorted fractions of plastic waste material from the pre-processing section (210) into said sorted fraction storage container (420),
- at least one storage container waiting position (322) for storing the sorted fraction storage containers, wherein each container is at least partially filled with at least one of the sorted fractions of plastic waste material.,
- at least one storage container unloading position (323) adjacent to the at least one input unit (221) of the post-processing section (220) configured for receiving at least one of the sorted fractions of plastic waste material from the respective sorted fraction storage container (420),
- at least one position (330) for storing waste storage containers (430) each container at least partially filled with rejected waste material from the pre-processing section (210) or optionally post-processing section (220),
- at least one waste storage container filling position (331) adjacent to the at least one discarding unit (214) of the pre-processing section (210) or post-processing section (220) configured for filling the rejected waste material fraction into said waste storage container (430),
- at least one product storage container filling position (341) adjacent to the at least one filling unit (225) configured for filling the post- processed plastic waste material from the post-processing section into said product storage container (440),
- - at least one position (340) for storing product storage containers (440) each container at least partially filled with post- processed plastic waste material,
- at least one automated container transport and tracking system (500) configured for placing and moving said storage containers (410, 420, 430, 440) from or to one of said positions (310, 320, 330, 340) of the container yard (300).

2. Recycling plant according to claim 1, wherein the at least one post-processing unit (224) of the at least one post-processing section (220) comprises
- at least one plastic waste cleaning unit (222) for cleaning the at least one sorted fraction of plastic waste material, and/or
- at least one heat-processing unit (223) configured for thermally processing the at least one sorted fraction of plastic waste material, and/or
- at least one discarding unit (226) configured for filling any rejected waste material from the post-processing step into rejected waste material storage containers (430).

3. Recycling plant according to one of the preceding claims, wherein the at least one pre-processing section (210) of the at least one process building (200) comprises additionally at least one input unit (215) configured for receiving at least one chemical.

4. Recycling plant according to one of the preceding claims, wherein the at least one container yard (300) comprises additionally at least a further section (350) for containers (450) comprising chemicals.

5. Recycling plant according to one of the preceding claims, wherein each position (310, 320, 330, 340, 350) of the at least one container yard (300) is dimensioned to receive a plurality of each of the storage containers (410, 420, 430, 440, 450).

6. Recycling plant according to one of the preceding claims, wherein the number of input units (211, 221), filling units (213, 225) and discarding units (214, 226) differs from each other.

7. Recycling plant according to one of the preceding claims, wherein multiple filling units (213) of the pre-processing section (210) configured for filling the sorted fractions into sorted fraction storage containers (420) are provided, wherein each of the filling units (213) is configured for filling one of the multiple sorted fractions of the plastic waste material into at least one sorted fraction storage container (420).

8. Recycling plant according to one of the preceding claims, wherein the number of filling units (213) of the pre-processing section (210) configured for filling the sorted fractions of plastic waste material into storage containers (420) is larger than the number of input units (221) of the post-processing section (220) configured for receiving the sorted fractions from the sorted fraction storage containers (420).

9. Recycling plant according to one of the preceding claims, wherein the at least one automated container transport system (500) is an overhead crane.

10. Recycling plant according to one of the preceding claims, wherein each storage container (410, 420, 430, 440, 450) is provided with at least one tracking system.

11. Recycling plant according to claim 10, wherein the tracking system comprises at least data associated with the delivery of an incoming shipment of multi-fractional plastic waste material, and the recycling process comprising the steps of unloading, sorting, intermediate storage, processing, product storage and optionally product packaging.

12. A method for recycling multi-fractional plastic waste material in a recycling plant comprising at least one process building (200) with at least one pre-processing section (210) and at least one post-processing section (220) and at least one container yard (300) with multiple positions (310, 320, 330, 340) for unloading, storing and loading empty or at least partially filled storage containers, in particular storage containers each at least partially filled with multi-fractional plastic waste material (410), sorted fractions of plastic waste material (420), rejected waste material (430) and thermally processed plastic waste material (430) according to one of the preceding claims,
wherein the method comprises the steps of:
- Automatically moving the storage container (410) at least partially filled with multi-fractional plastic waste from its storage position (310) of the container yard (300) to the at least one input unit (211) of the pre-processing section (210) configured for receiving multi-fractional plastic waste material,
- Pre-processing the multi-fractional plastic waste material by sorting the multi-fractional plastic waste material into sorted fractions of plastic waste material and rejected waste material fraction in a least one sorting unit (212) of the pre-processing section (220),
- Filling at least a part of one of the sorted fractions of plastic waste material at at least one filling unit (213) of the pre-processing section (210) configured for filling the sorted fractions of plastic waste material into at least one sorted fraction storage container (420) at a sorted fraction storage container filling position (321) of the sorted fraction storage container position (320) being adjacent to the at least one filling unit (213) of the pre-processing section (210),
- Automatically moving at least one sorted fraction storage container (420) from the sorted fraction storage filling position (321) to a sorted fraction storage container waiting position (322), and
- Automatically moving at least one sorted fraction storage container (420) from the sorted fraction storage container waiting position (322) to the sorted fraction storage container unloading position (323) adjacent to at least one input unit (221) of the post-processing section (220) configured for receiving at least one of the sorted fractions of plastic waste material from the respective sorted fraction storage container (420), or
- Optionally automatically moving at least a part of the sorted fractions of plastic waste material directly from the pre-processing section to the post-processing section, for example using a conveyer belt,
- Post-processing at least one of a part of the sorted fractions of plastic waste material in at least one post-processing unit (224) of the post-processing section (220), and
- Filling the post-processed plastic waste material by at least one filling unit (225) configured for filling the post-processed plastic waste material into at least one product storage container (430) at a product storage container position (341) being adjacent to the at least one filling unit (225),
- wherein the containers are moved automatically by at least one automated container transport and tracking system (500) configured for placing and moving said storage containers (410, 420, 430, 440) from or to one of said positions (310, 320, 330, 340) of the container yard (300).

13. Method according to claim 12, wherein waste material rejected during pre-processing and/or post-processing is filled at at least one discarding unit (214) of the pre-processing section (210) and/or at at least one discarding unit (226) of the post-processing unit (220) into a waste storage container (430) at a waste storage container filling position (331) for waste storage containers (430) of the container yard being adjacent to the at least one discarding unit (214, 226).

14. Method according to one of the claims 12-13, wherein the post-processing of the multiple sorted fractions of plastic waste material in the post-processing section (220) is operated campaign-wise by switching between a first campaign of post-processing a first of the multiple sorted fractions of plastic waste material and a second (further) campaign of post-processing a second (further) of the multiple sorted fractions of plastic waste material.

15. Method according to one of the claims 12-14, wherein the storage containers (or storage container positions) are tracked using a tracking system.
